# FASCICULE DE BREVET EUROPEEN

(11) **EP 1 259 959 B1**
(45) Date de publication et mention de la délivrance du brevet: **07.01.2004**
(21) Numéro de dépôt: 01907710.6
(22) Date de dépôt: 06.02.2001
(51) Int. Cl.: G11B 7/007, G11B 23/28

(54) **DISQUE OPTIQUE PROTEGE CONTRE LA COPIE ET PROCEDE DE PROTECTION POUR UN TEL DISQUE**
KOPIERGESCHÜTZTE OPTISCHE PLATTE UND SCHUTZVERFAHREN FÜR EINE SOLCHE PLATTE
COPY-PROTECTED OPTICAL DISC AND METHOD FOR PROTECTING SAME

(30) Priorité: 11.02.2000 FR 0002042
(43) Date de publication de la demande: 27.11.2002
(73) Titulaire: Thales, 75008 Paris (FR); MOULAGE PLASTIQUE DE L'OUEST, F-53700 Villaines-la-Juhel (FR)
(72) Inventeur: Pirot, François-Xavier Thomson-CSF Prop. Intel., 94117 Arcueil Cedex (FR); Duhamel, Jean-Louis Thomson-CSF Propriété Intell., 94117 Arcueil Cedex (FR); Des Rieux, Marc Thomson-CSF Propriété Intel., 94117 Arcueil Cedex (FR); Le Carvennec, François Thomson-CSF Propriété Intel, 94117 Arcueil Cedex (FR)
(74) Mandataire: Chaverneff, Vladimir
(86) Numéro de dépôt international: PCT/FR2001/000344
(87) Numéro de publication internationale: WO 2001/059774

(56) Documents cités:
- FR-A- 2 769 119
- PATENT ABSTRACTS OF JAPAN vol. 1996, no. 10, 31 octobre 1996 (1996-10-31) & JP 08 147767 A (VICTOR CO OF JAPAN LTD), 7 juin 1996 (1996-06-07)

## Description

L'invention se rapporte à un disque optique protégé contre la copie du type comportant au moins une piste en spirale continue et à un procédé de protection contre la copie pour vérifier si un tel disque est un disque original ou une copie illégale.

L'invention s'applique en particulier aux disques du type CD-ROM.

Il est bien connu que, notamment dans le domaine de l'édition de logiciels, des pertes considérables sont supportées par les éditeurs du fait du piratage des logiciels. Cette situation s'est encore aggravée du fait de la mise à disposition du grand public d'enregistreurs ou graveurs de disque type CD-R ou CD-RW qui permettent à un prix très faible de faire une copie parfaite de disques CD-ROM originaux.

De nombreuses techniques ont donc été développées, en particulier ces dernières années, pour empêcher la copie illégale des disques optiques. Une des plus simples parmi celles-ci consiste à inscrire en un endroit prédéterminé du disque lors de sa fabrication un code de protection contre la copie. Cet endroit prédéterminé est tel que de nombreuses techniques de copie ne peuvent pas reproduire cet endroit du disque. Les lecteurs sont faits pour rejeter les disques n'ayant pas de code de protection au bon endroit. Mais il est évident que tout dispositif fait ou modifié pour lire toutes les données d'un disque peut copier le disque y compris son code de protection, et la copie illégale obtenue est exactement semblable au disque original.

Une autre technique connue est la méthode SCMS ("Serial Copy Management System") selon laquelle un disque porte un code SCMS qui autorise ou non la copie. Un disque ayant un code SCMS autorisant la copie peut être copié mais le dispositif de copie change le code SCMS pour un code interdisant toute autre copie. Mais, comme on le voit, cette technique souffre du même inconvénient que précédemment lorsque l'on copie toutes les données du disque telles quelles.

D'autres techniques relativement sophistiquées ont été imaginées pour remédier aux problèmes de copie non autorisées. La plupart d'entre elles impliquent l'utilisation d'une "signature" ou empreinte spécifique sur le disque. Cela peut consister en une variation de certains paramètres de gravure sur le disque, tels que forme des marques (profondeur, largeur, longueur), introduction d'une asymétrie des marques, wobulation de la piste à des fréquences particulières, etc... Ces variations constituent la signature à rechercher et ne peuvent être reproduites par des graveurs usuels tels que les graveurs de CD-R. Cependant, il est nécessaire que les lecteurs de disque détectent ces variations et cela n'est généralement pas possible avec des lecteurs standards. Une variante de cette méthode permet de créer des mots de code ambigus susceptibles d'être lus avec des valeurs différentes lors de plusieurs lectures successives du disque avec des lecteurs standards.

Une technique différente consiste à détruire ou endommager volontairement des spires ou secteurs du disque original dont les adresses peuvent être cryptées pour constituer un code identificateur du disque inscrit sur celui-ci. Cependant, un inconvénient de ce genre de technique est qu'elle nécessite d'authentifier l'utilisateur du disque par une information d'accès plus ou moins complexe que l'utilisateur devra introduire comme clé pour obtenir l'accès au contenu du disque. Cette information doit souvent être demandée à une station d'habilitation. Cette technique impose donc des contraintes non négligeables. Un autre inconvénient de telles méthodes de reconnaissance de parties endommagées est qu'elle ne permet de cacher qu'une faible quantité de données, donc susceptible d'être aisément incorporée dans le corps du logiciel. Un autre inconvénient est que l'écriture de telles marques est structurellement à la portée des graveurs de disques du commerce, le seul obstacle à la recopie des disques étant que le logiciel de commande de ces graveurs est inadapté à la gestion de telles marques, erreurs ou omissions. Une modification de l'un des logiciels de commande (au niveau du processeur utilisateur ou du logiciel interne du graveur) serait cependant suffisante pour recopier ces disques. On peut noter ici l'endommagement du disque peut à la limite consister en l'omission pure et simple de certains secteurs.

Pour essayer de remédier à certains de ces inconvénients et renforcer la sécurité des systèmes antipiratage à codes cachés, on a développé des techniques à spirale interrompue ou à zones séparées entre lesquelles les données sont réparties de façon à interdire un enregistrement en continu de données exécutables. De telles techniques peuvent toutefois entraîner une réduction de densité des informations sur le disque ou parfois l'utilisation de lecteurs non standards.

Une voie paraissant plus prometteuse a été esquissée en prévoyant un disque comportant une spirale ou piste principale continue entre les tours de laquelle est intercalé un tronçon de spirale secondaire, l'écartement ou pas standard des pistes de disque optique conventionnel étant conservé. Une méthode d'authentification consiste alors à "reconnaître" la spirale secondaire seulement en vérifiant la présence de codes d'identification ou d'adresses spécifiques qui ne se retrouvent pas sur la piste principale. Cependant cette technique ne met pas à profit de manière efficace l'intérêt majeur de disposer d'une zone qui n'est pas reproductible facilement par un graveur standard.

L'invention a pour but de remédier à ces inconvénients et de mettre à profit l'intérêt de l'existence d'une telle zone qui permet d'éliminer les copies classiques à l'aide de graveurs standard, grâce à la reconnaissance de la présence physique d'une zone de protection en deux parties.

Selon l'invention, il est donc prévu un disque optique protégé contre la copie du type comportant au moins une piste en spirale sur laquelle sont inscrites des marques d'information rangées dans des secteurs dont les adresses sont sensiblement séquentielles le long de la piste, caractérisé en ce que ledit disque comprend :
- une zone de protection à deux parties de même taille incluant chacune une série de secteurs désignés par des adresses identiques pour chaque partie, les informations stockées dans cette zone étant distribuées entre les secteurs des deux parties et chaque secteur de la zone portant en outre une information d'identification caractéristique de la partie à laquelle appartient le secteur ; et
- au moins des informations spécifiques de protection pour contrôler la présence et la constitution de ladite zone de protection et permettre l'utilisation des informations stockées dans cette zone, au moins certains des éléments desdites informations spécifiques étant enregistrés sur ledit disque.

L'avantage de l'existence d'une zone de protection en deux parties est particulièrement important si l'une des parties est disposée sur une piste secondaire intercalée partiellement entre des spires de la piste principale. Car ainsi, il devient impossible pour un graveur standard de réaliser un disque à deux pistes et on peut rendre très difficile toute copie illégale d'un disque en vérifiant la structure physique du disque lu. De plus, même une modification de l'électronique de commande d'un équipement industriel de fabrication de disques-maîtres ne permettrait alors pas de dupliquer les disques selon l'invention.

Selon un autre aspect de l'invention il est donc prévu un disque optique tel que défini ci-dessus, caractérisé en ce qu'il comporte une piste principale en spirale continue disposée sur toute la partie utile du disque et dont les secteurs ont des adresses ordonnées séquentiellement le long de cette piste et une piste secondaire intercalée partiellement entre des spires de la piste principale, les secteurs de ladite piste secondaire et les secteurs en vis-à-vis de la piste principale dans une direction radiale donnée portant les mêmes adresses de manière à former lesdites deux parties de la zone de protection.

Selon d'autres aspects de l'invention, il est aussi prévu un procédé de protection contre la copie pour vérifier si un disque optique est un disque original ou une copie illégale et empêcher l'utilisation normale d'une telle copie, ledit disque original comportant au moins une piste en spirale sur laquelle sont inscrites des marques d'information rangées dans des secteurs dont les adresses sont sensiblement séquentielles le long de la piste, ledit procédé étant caractérisé en ce qu'il consiste à :
- définir sur le disque original une zone de protection à deux parties de même taille incluant chacune une série de secteurs désignés par des adresses identiques pour chaque partie, les informations stockées dans cette zone étant distribuées entre les secteurs des deux parties et chaque secteur de la zone portant en outre une information d'identification caractéristique de la partie à laquelle appartient le secteur ;
- effectuer une succession de lectures d'au moins un secteur prédéterminé de la zone de protection ;
- vérifier, grâce aux informations d'identification, qu'au cours de ces lectures, on a accédé aux deux secteurs prédéterminés de ladite zone portant la même adresse et appartenant respectivement aux deux parties de cette zone.

L'invention sera mieux comprise et d'autres caractéristiques et avantages apparaîtront à l'aide de la description ci-après et des dessins joints où :
- la Figure 1 représente un disque optique selon une première variante selon l'invention ;
- la Figure 2 est une représentation sous forme linéaire des tours de spirale du disque de la Figure 1 ;
- la Figure 3 montre un organigramme de fonctionnement du programme de protection selon l'invention ; et
- la Figure 4 est une représentation sous forme linéaire d'une seconde variante selon l'invention.

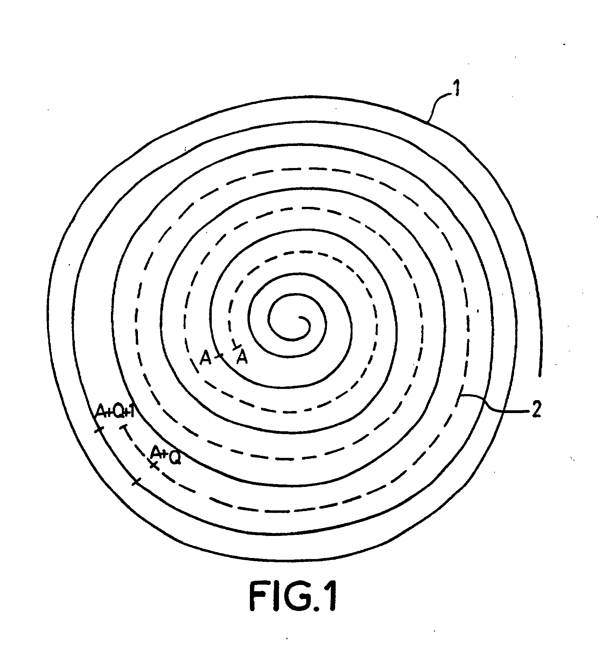

Selon une forme préférentielle de l'invention, comme représenté sur la Figure 1, le disque optique protégé contre la copie comporte une piste principale 1 en spirale continue disposée sur toute la partie utile du disque et dont les secteurs ont, de manière classique, des adresses ordonnées séquentiellement le long de cette piste. Une piste secondaire 2 est intercalée entre des spires successives de la piste principale, de manière que le pas de la piste reste, sensiblement dans toutes les zones du disque, constant et égal au pas standard habituellement utilisé dans les disques optiques de type classique, tels que les disques CD-ROM mais aussi les disques du type DVD. On peut noter que le pas entre spires de la piste principale va en s'élargissant progressivement avant que ne débute la piste secondaire 2. De même, il va en se rétrécissant progressivement après la fin de celle-ci de manière à retrouver la valeur standard. Grâce à ces évolutions progressives du pas, on assure un asservissement de suivi radial de piste satisfaisant sans risque de provoquer des erreurs de servomécanisme qui résulteraient d'un élargissement brutal du pas et la tête de lecture peut suivre sans problème la piste principale même dans la zone à piste secondaire.

Une caractéristique de l'invention est que, dans la zone où coexistent les pistes principale et secondaire, les secteurs de ces deux pistes sont désignés par les mêmes adresses A à A+Q.

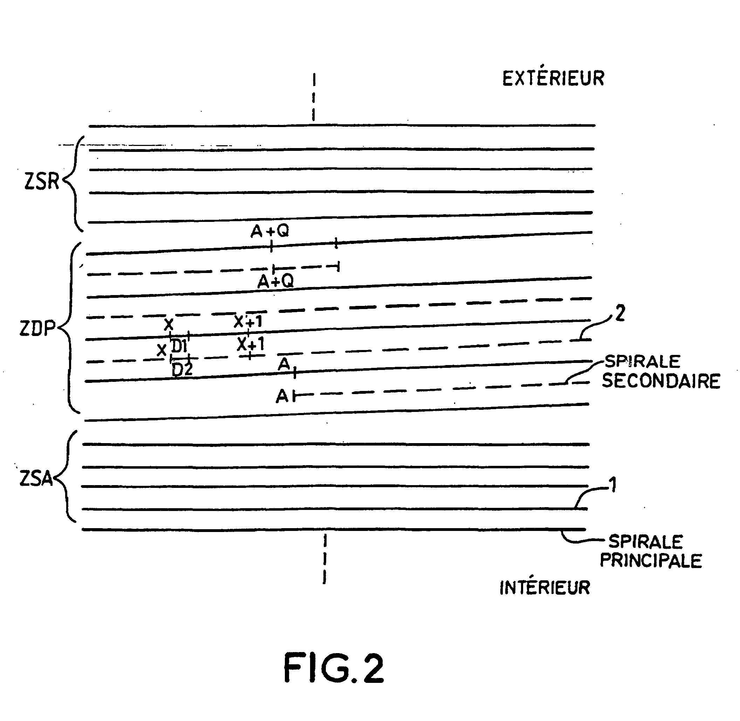

La Figure 2 représente le même disque sous forme linéaire, chaque spire d'une piste (ou encore chaque tour) étant représenté par un segment allant de l'extrémité gauche à l'extrémité droite de la figure. De même, on a indiqué l'intérieur du disque vers le bas de la figure, où commence la piste en spirale principale, et l'extérieur où finit cette piste.

On a désigné par "zone de protection" ZDP la zone où coexistent les deux pistes avec les mêmes adresses A à A+Q.

Par ailleurs, on définit une zone de saut avant ZSA incluant des spires de la piste principale ayant des secteurs d'adresses inférieures ou nettement inférieures à la première adresse A de la zone ZDP et une zone de saut arrière ZSR incluant des spires de la piste principale ayant des secteurs d'adresses supérieures ou nettement supérieures à la dernière adresse A+Q de la zone ZDP.

A titre d'exemple, on peut choisir des zones ZSA et ZSR ayant une taille de l'ordre de 1800 secteurs et se situant à environ 200 secteurs avant ou après la zone de protection ZDP. Celle-ci peut avoir une taille adaptée aux données que l'on veut y disposer. On peut choisir par exemple d'y inclure une zone d'amorce de l'ordre d'une quarantaine de secteurs dont les trente premiers ne sont pas lisibles et les dix suivants servent de zone d'accrochage pour la lecture puis la zone de données de protection proprement dite de taille égale à 235 secteurs, ce qui donnera une zone ZDP de 275 secteurs. Bien entendu, ces tailles sont purement indicatives et sont fonction des données à cacher qui sont stockées dans les deux parties (piste principale et piste secondaire) de la zone ZDP.

Chaque secteur des deux parties de la zone ZDP contient une information d'identification ou identifiant, D1 pour la spirale principale et D2 pour la spirale secondaire, de manière à différencier les deux spirales.

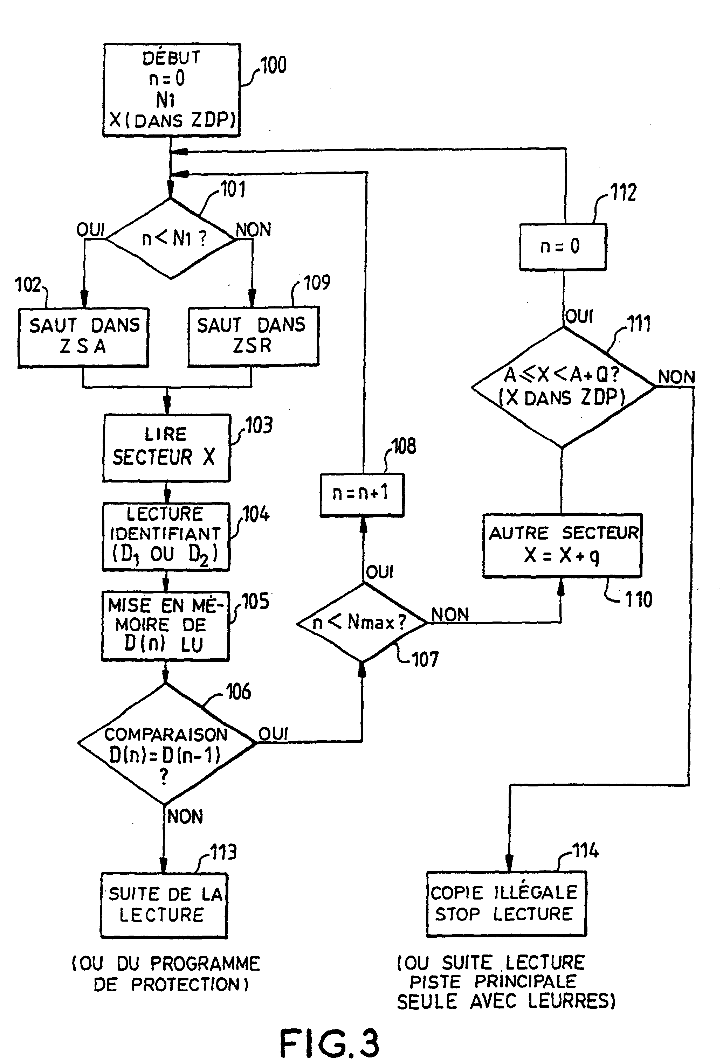

D'autre part, dans une zone quelconque (ou en plusieurs zones différentes) du disque, sont enregistrées des informations spécifiques de protection pour contrôler la présence et la constitution de la zone ZDP et permettre l'utilisation des informations stockées dans cette zone. Ces informations spécifiques mettent en oeuvre le procédé de protection contre la copie selon l'invention, schématisé selon l'organigramme de la Figure 3.

L'étape d'initialisation 100 fixe à 0 un paramètre n correspondant au nombre de lectures successives effectuées sur un secteur donné d'adresse X choisi dans la zone ZDP. Le principe du procédé selon l'invention consiste à effectuer une série de lectures d'un secteur d'adresse X de la zone ZDP (ou plusieurs secteurs) de manière à vérifier qu'on finit par lire les deux secteurs de même adresse de la zone ZDP, ce qui confirme l'existence des deux parties de mêmes adresses de la zone ZDP.

Il est clair qu'un lecteur standard effectuant des lectures successives toujours dans les mêmes conditions a statistiquement toutes les chances de toujours lire le secteur de la même partie. Ainsi, en partant d'une adresse inférieure à l'adresse A, il a toutes les chances de toujours lire la spirale secondaire car, pour une même adresse, c'est cette piste qui se présente en premier et est normalement sélectionnée. Inversement, en partant d'une adresse supérieure à A+Q, c'est normalement la piste principale qui sera sélectionnée.

Cela étant, le procédé selon l'invention comprend une série de lectures à partir de la zone de saut avant ZSA, par exemple N1 lectures au maximum, suivie d'une série de lectures à partir de la zone de saut arrière ZSR jusqu'à un nombre total Nₘₐₓ de lectures.

Ainsi, après l'initialisation 100, on vérifie, 101, que le nombre de lectures déjà réalisées est inférieur à N1. Si oui, on effectue un saut dans la zone ZSA (102), puis le lecteur reçoit l'ordre de lire le secteur d'adresse X dans la zone ZDP. Il lit ce secteur et son identifiant (104) et met en mémoire (105) cet identifiant D pour la lecture n (soit D(n)). Cet identifiant lu est comparé (106) à l'identifiant précédemment lu et mis en mémoire. Si, ce qui est le plus probable, les deux identifiants sont identiques (lecture de la même piste), on va recommencer une nouvelle lecture après vérification (107) qu'on n'a pas atteint le nombre maximum Nₘₐₓ de lectures prédéterminé et incrémentation (108) du nombre n. Si, par suite d'une perturbation quelconque, au cours de ces N1 lectures, le lecteur finit par tomber sur la piste principale et le secteur X de celle-ci, alors l'identifiant lu, D1, est différent de l'identifiant précédent et on passe (113) à la suite de la lecture du disque ou, de préférence, à la suite de l'utilisation des informations spécifiques de protection qui peut inclure la lecture de tous les secteurs des deux pistes de la zone de protection ZDP pour rassembler toutes les données cachées.

Si, au bout des N1 lectures, on n'a toujours lu que le secteur X de la piste secondaire, alors à la lecture N1 (101), on effectue un saut dans la zone ZSR (109) et on continue de réaliser les opérations 103, 104, 105, 106. Il y a maintenant de fortes chances que le secteur d'adresse X lu soit sur la piste principale. A la première lecture sur cette piste, l'identifiant D1 sera différent de l'identifiant précédent et on passe alors à la suite (113) des opérations.

Par contre, si l'on atteint les Nₘₐₓ lectures sans avoir trouvé deux identifiants différents, on passe alors (107) à la lecture d'un secteur d'une autre adresse X+q (110) de la zone ZDP, q étant un entier choisi entre 1 et au maximum Q. En effet, on estime qu'une vérification par le sous-programme de protection d'une seule adresse peut être insuffisante pour diverses raisons tenant notamment au comportement du lecteur. Pour la nouvelle adresse X = X+q, on vérifie (111) qu'elle est bien dans la zone ZDP, puis on remet n à zéro (112) et on reprend le cours du programme de vérification. Si, après la vérification d'un certain nombre de secteurs, on s'aperçoit (111) que l'on sort de la zone de protection ZDP sans avoir rencontré les deux identifiants, on en conclut (114) que la vérification a échoué et qu'il ne s'agit pas d'un disque original mais d'une copie illégale.

On peut alors décider soit que l'on arrête la lecture, le lecteur pouvant afficher l'information ou même éjecter le disque, soit qu'on poursuit une lecture dégradée.

Pour cela, on peut imaginer que les parties d'information de l'application enregistrée sur le disque, qui sont normalement cachées sur la piste secondaire, sont remplacées sur la piste principale par des informations "leurres" qui permettent de dérouler l'application en lisant seulement la piste principale mais sous une forme dégradée. Ainsi le lecteur ne s'arrête pas et il devient plus difficile de détecter et déchiffrer les opérations de protection mises en place.

Un avantage important du système qui vient d'être décrit est l'utilisation d'une piste secondaire qui ne peut pas être gravée par un graveur conventionnel. L'existence physique de cette piste peut être vérifiée par tout moyen tel que identification de la piste secondaire, de son positionnement et de sa longueur, ce qui renforce l'effet antipiratage obtenu.

On doit noter ici que les identifiants, au lieu d'être des informations d'identification spécifiquement inscrites dans chaque secteur de la zone ZDP, pourraient être implicites, en ce sens que le procédé selon l'invention consiste à vérifier qu'on a bien lu les informations des deux pistes pour une même adresse de secteur, ce qui revient bien à identifier la présence des deux pistes. Ainsi, lorsqu'on parlera d'identifiant ou information d'identification, on doit comprendre qu'il peut s'agir du contenu de l'information utile elle-même qui est effectivement lue.

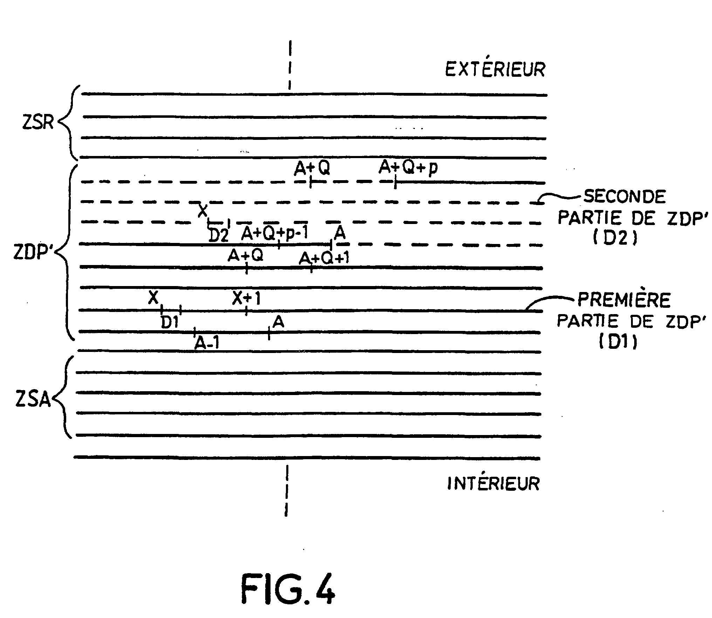

La Figure 4 représente une variante d'un disque protégé contre la copie qui utilise le même procédé que précédemment. Dans cette variante, le disque comporte une seule piste en spirale continue. Comme précédemment, on définit une zone de protection ZDP' qui comprend deux parties ayant chacune le même nombre de secteurs avec les mêmes adresses A à A+Q. Ces deux parties peuvent être directement à la suite l'une de l'autre ou bien être séparées par un certain nombre p-1 de secteurs comme sur la Figure 4, les adresses de ces secteurs intermédiaires suivant de manière séquentielle celles de la première partie de la zone ZDP'. Ici aussi, les secteurs de chaque partie comprennent un identifiant, D1 pour la première partie, D2 pour la seconde.

Il est possible de constater que le procédé de protection selon l'organigramme de la Figure 3 s'applique sans modifications.

On peut noter que les deux variantes peuvent être distinguées par la présence physique ou non de la piste secondaire.

Le déroulement temporel des opérations est aussi un moyen de vérification que le disque lu est bien un disque original, à une ou à deux pistes spirales selon le cas. Dans cet ordre d'idées, on peut, à titre de simple exemple, utiliser la méthode simplifiée suivante pour vérifier la présence physique d'une piste secondaire selon l'invention sur le disque.

Cette méthode comprend les étapes suivantes :
1. Lecture, à partir d'une adresse nettement inférieure à l'adresse A, de secteurs (un ou plusieurs) d'adresses X, X étant compris entre A et A+Q, c'est-à-dire situé dans la zone ZDP, et détection de l'identifiant de ces secteurs. Cette étape est celle déjà décrite dans l'organigramme de la Figure 3 (101, 102, 103, 104, 105) pour n < N1.
2. Lecture, à partir d'une adresse nettement supérieure à A+Q, de secteurs d'adresses X, X étant compris entre A et A+Q, c'est-à-dire situé dans la zone ZDP, et détection de l'identifiant de ces secteurs. Cette étape est celle déjà décrite dans l'organigramme de la Figure 3 (101, 109, 103, 104, 105) pour n compris entre N1 et Nₘₐₓ.
3. Lecture, à partir d'une adresse nettement inférieure à l'adresse A, c'est-à-dire à partir de la zone ZSA, des secteurs successifs d'adresse A à A+O, détection de l'identifiant et mesure du temps t₃ nécessaire pour cette lecture.
4. Lecture, à partir d'une adresse nettement inférieure à l'adresse A, c'est-à-dire à partir de la zone ZSA, des secteurs successifs d'adresse A à A+Q+p, détection de l'identifiant et mesure du temps t₄ nécessaire pour cette lecture. p est un entier petit devant le nombre Q.
5. Lecture, à partir d'une adresse nettement supérieure à l'adresse A+Q, c'est-à-dire en principe à partir de la zone ZSR, des secteurs successifs d'adresse A+Q-k à A+Q+p et détection de l'identifiant. k est un entier petit devant le nombre Q.

A partir de ces cinq étapes, on peut considérer que le disque lu a une structure à double spirale si les trois conditions suivantes sont réunies :
A. On détecte l'existence des deux identifiants D2 et D1 lors des étapes successives 1 et 2.
B. Les temps t3 et t4, mesurés au cours des étapes 3 et 4, ne diffèrent que d'une valeur faible, fonction du nombre p choisi.
C. La lecture de l'opération 5 est possible et l'identifiant pour les secteurs A+Q-k à A+Q est celui détecté lors de l'opération 2 (l'identifiant pour les secteurs A+Q+1 à A+Q+p peut être absent).

Les conditions A et B suffisent déjà à elles seules à distinguer l'existence physique de la piste secondaire dans la plupart des cas. La condition C permet d'éliminer les cas restants qui pourraient mettre en défaut la réunion des conditions A et B.

Grâce au disque protégé selon l'invention, on obtient donc une protection très améliorée contre le piratage et une détection sûre des copies illicites.

Bien entendu, les exemples de réalisation décrits ne sont nullement limitatifs de l'invention ; il est évident notamment que l'on peut inverser l'ordre des deux pistes ou des deux parties de mêmes adresses de l'intérieur vers l'extérieur du disque : il suffit d'intervertir les identifiants dans les conditions A à C ci-dessus. D'autre part, il est bien évident que, si l'on a décrit le cas d'une piste secondaire sur un disque, on peut parfaitement appliquer l'invention lorsque l'on dispose plusieurs pistes secondaires (ou tronçons) à plusieurs endroits différents du disque. On ne doit pas non plus exclure le cas de deux spirales parallèles, la zone de protection n'utilisant par exemple qu'une partie de celles-ci.

## Revendications

1. Disque optique protégé contre la copie du type comportant au moins une piste (1) en spirale sur laquelle sont inscrites des marques d'information rangées dans des secteurs dont les adresses sont sensiblement séquentielles le long de la piste, **caractérisé en ce que** ledit disque comprend :
- une zone de protection (ZDP) à deux parties de même taille incluant chacune une série de secteurs désignés par des adresses identiques (A à A+Q) pour chaque partie, les informations stockées dans cette zone étant distribuées entre les secteurs des deux parties et chaque secteur de la zone portant en outre une information d'identification (D1, D2) caractéristique de la partie à laquelle appartient le secteur ; et
- au moins des informations spécifiques de protection pour contrôler la présence et la constitution de ladite zone de protection (ZDP) et permettre l'utilisation des informations stockées dans cette zone, au moins certains des éléments desdites informations spécifiques étant enregistrés sur ledit disque.

2. Disque optique selon la revendication 1, **caractérisé en ce qu'**il comporte une piste principale (1) en spirale continue disposée sur toute la partie utile du disque et dont les secteurs ont des adresses ordonnées séquentiellement le long de cette piste et au moins une piste secondaire (2) intercalée entre des spires de la piste principale, des secteurs de ladite piste secondaire et les secteurs sensiblement en vis-à-vis de la piste principale dans une direction radiale donnée portant les mêmes adresses (A à A+Q) de manière à former lesdites deux parties de la zone de protection (ZDP).

3. Disque optique selon la revendication 2, **caractérisé en ce que** l'imbrication de la piste secondaire dans la piste principale s'effectue de manière que le pas des spires reste le pas normal sur sensiblement l'ensemble du disque.

4. Procédé de protection contre la copie pour vérifier si un disque optique est un disque original ou une copie illégale et empêcher l'utilisation normale d'une telle copie, ledit disque original comportant au moins une piste en spirale (1) sur laquelle sont inscrites des marques d'information rangées dans des secteurs dont les adresses sont sensiblement séquentielles le long de la piste, ledit procédé étant **caractérisé en ce qu'**il consiste à :
- définir sur le disque original une zone de protection (ZDP ; ZDP') à deux parties de même taille incluant chacune une série de secteurs désignés par des adresses identiques (A à A+Q) pour chaque partie, les informations stockées dans cette zone étant distribuées entre les secteurs des deux parties et chaque secteur de la zone portant en outre une information d'identification (D1, D2) caractéristique de la partie à laquelle appartient le secteur ;
- effectuer une succession de lectures d'au moins un secteur (X) prédéterminé de la zone de protection ;
- vérifier, grâce aux informations d'identification (D1, D2), qu'au cours de ces lectures, on a accédé aux deux secteurs (X) prédéterminés de ladite zone portant la même adresse et appartenant respectivement aux deux parties de cette zone.

5. Procédé de protection contre la copie selon la revendication 4, **caractérisé en ce qu'**il consiste en outre à définir sur le disque original une zone de saut avant (ZSA) et une zone de saut arrière (ZSR) encadrant la zone de protection (ZDP ; ZDP') et **en ce que** l'étape d'effectuer une succession de lectures consiste à faire une première série de lectures en partant de la zone de saut avant et une seconde série de lectures en partant de la zone de saut arrière.

6. Procédé selon l'une des revendications 4 ou 5, **caractérisé en ce que**, lorsque l'étape de vérification de l'accession au secteur prédéterminé (X) n'a pas permis d'accéder aux deux secteurs de même adresse, on renouvelle cette étape sur d'autres secteurs de la zone de protection (ZDP ; ZDP').

7. Procédé selon l'une quelconque des revendications 4 à 6, dans lequel le disque original comporte une piste principale (1) en spirale continue, disposée sur toute la partie utile du disque et dont les secteurs ont des adresses ordonnées séquentiellement le long de cette piste, et au moins une piste secondaire (2) intercalée entre les spires de la piste principale, ledit procédé étant **caractérisé en ce que** l'on attribue les mêmes adresses (A à A+Q) à des secteurs successifs de la piste secondaire et aux secteurs sensiblement en vis-à-vis de la piste principale dans une direction radiale donnée, de manière à former lesdites deux parties de la zone de protection.

8. Procédé selon la revendication 7, **caractérisé en ce qu'**il comprend en outre une étape de vérifier la présence physique de ladite piste secondaire.

9. Procédé selon la revendication 8, **caractérisé en ce que** la vérification de la présence physique de la piste secondaire est basée sur la vérification des durées de différents traitements et/ou lectures effectués sur le disque.

10. Procédé selon la revendication 9, **caractérisé en ce que** ladite vérification de la présence physique de la piste secondaire consiste à mesurer le temps nécessaire à la lecture de tous les secteurs disposés entre une adresse précédant la première adresse (A) de ladite zone de protection (ZDP) et une adresse suivant la dernière adresse (A + Q) de cette zone de protection.

11. Procédé selon la revendication 9, **caractérisé en ce que** ladite vérification de la présence physique de la piste secondaire consiste à mesurer le temps (t₃) nécessaire à la lecture de tous les secteurs ayant une adresse comprise entre la première adresse (A) de la zone de protection (ZDP) et la dernière adresse (A+Q) de cette zone de protection en partant d'une des zones de saut (ZSA, ZSR), puis à mesurer le temps (t₄) nécessaire à la lecture de tous les secteurs ayant une adresse comprise entre la première adresse (A) de la zone de protection (ZDP) et une adresse (A+Q+p) suivant la dernière adresse (A+Q) de cette zone de protection, en partant de la même zone de saut, enfin à comparer lesdits temps de lecture (t₃, t₄).

12. Procédé selon la revendication 11, **caractérisé en ce que** l'on prévoit en outre d'effectuer, à partir de l'autre zone de saut (ZSR, ZSA), une lecture des secteurs d'adresses comprises entre une adresse (A+Q-k) précédant la dernière adresse (A+Q) de la zone de protection et une adresse (A+Q+p) suivant la dernière (A+Q) de cette zone de protection, et de vérifier l'information d'identification (D1, D2) détectée au cours de cette lecture.

13. Procédé selon l'une des revendications 7 à 12, **caractérisé en ce que** l'on prévoit en outre de remplacer, sur la piste principale, les éléments d'information de l'application enregistrée distribuées dans les secteurs de la piste secondaire par des leurres formant avec les autres informations de la piste principale un tout cohérent et exécutable et, lorsque ledit procédé montre qu'il s'agit d'un disque copie, de laisser lire les informations et leurres de la piste du disque pour laisser se dérouler une application dégradée.

## Patentansprüche

1. Optische Platte, die gegen Kopieren geschützt und von dem Typ ist, der wenigstens eine spiralförmige Spur (1) aufweist, in die Informationsmerkmale geschrieben sind, die in Sektoren angeordnet sind, deren Adressen längs der Spur im wesentlichen sequentiell sind, **dadurch gekennzeichnet, daß** die Platte umfaßt:
- eine Schutzzone (ZDP) mit zwei Teilen gleicher Größe, die jeweils eine Reihe von Sektoren enthalten, die durch gleiche Adressen (A bis A + Q) für jeden Teil bezeichnet sind, wobei die in dieser Zone gespeicherten Informationen auf die Sektoren der beiden Teile verteilt sind und jeder Sektor der Zone außerdem Identifizierungsinformationen (D1, D2) trägt, die für den Teil, zu dem der Sektor gehört, charakteristisch sind; und
- wenigstens bestimmte Schutzinformationen, um das Vorhandensein und den Aufbau der Schutzzone (ZDP) zu kontrollieren und um die Verwendung der in dieser Zone gespeicherten Informationen zu ermöglichen, wobei wenigstens bestimmte der Elemente dieser bestimmten Informationen auf die Platte aufgezeichnet sind.

2. Optische Platte nach Anspruch 1, **dadurch gekennzeichnet, daß** sie eine kontinuierliche, spiralförmige Hauptspur (1), die auf dem gesamten Nutzabschnitt der Platte angeordnet ist und deren Sektoren längs dieser Spur sequentiell geordnete Adressen besitzen, und wenigstens eine sekundäre Spur (2), die zwischen den Windungen der Hauptspur verschachtelt ist, umfaßt, wobei die Sektoren der sekundären Spur und die Sektoren, die sich in einer gegebenen radialen Richtung im wesentlichen gegenüber der Hauptspur befinden, die gleichen Adressen (A bis A + Q) tragen, derart, daß die beiden Teile der Schutzzone (ZDP) gebildet werden.

3. Optische Platte nach Anspruch 2, **dadurch gekennzeichnet, daß** die Verschachtelung der sekundären Spur in der Hauptspur in der Weise erfolgt, daß die Schrittweite der Windungen im wesentlichen auf der gesamten Platte die normale Schrittweite bleibt.

4. Verfahren für den Schutz vor einem Kopieren, um zu verifizieren, ob eine optische Platte eine Originalplatte oder eine illegale Kopie ist, und zum Verhindern der normalen Verwendung einer solchen Kopie, wobei die Originalplatte wenigstens eine spiralförmige Spur (1) aufweist, in die Informationsmerkmale geschrieben sind, die in Sektoren angeordnet sind, deren Adressen längs der Spur im wesentlichen sequentiell sind, wobei das Verfahren **dadurch gekennzeichnet ist, daß** es darin besteht:
- auf der Originalplatte eine Schutzzone (ZDP; ZDP') mit zwei Teilen gleicher Größe zu definieren, die jeweils eine Reihe von Sektoren enthalten, die durch gleiche Adressen (A bis A + Q) für jeden Teil bezeichnet sind, wobei die in dieser Zone gespeicherten Informationen auf die Sektoren der beiden Teile verteilt sind und jeder Sektor der Zone außerdem Identifizierungsinformationen (D1, D2) trägt, die für den Teil, zu dem der Sektor gehört, charakteristisch sind;
- eine Folge von Lesevorgängen wenigstens eines vorgegebenen Sektors (X) der Schutzzone auszuführen;
- anhand der Identifizierungsinformationen (D1, D2) zu verifizieren, ob während dieser Lesevorgänge auf zwei vorgegebene Sektoren (X) der Zone zugegriffen worden ist, die die gleiche Adresse tragen und zu dem einen bzw. zu dem anderen Teil dieser Zone gehören.

5. Verfahren zum Schutz vor einem Kopieren nach Anspruch 4, **dadurch gekennzeichnet, daß** es außerdem darin besteht, auf der Originalplatte eine Vorwärtssprungzone (ZSA) und eine Rückwärtssprungzone (ZSR) zu definieren, die die Schutzzone (ZDP; ZDP') einrahmen, und daß der Schritt des Ausführens einer Folge von Lesevorgängen darin besteht, eine erste Reihe von Lesevorgängen ausgehend von der Vorwärtssprungzone und eine zweite Reihe von Lesevorgängen ausgehend von der Rückwärtssprungzone auszuführen.

6. Verfahren nach einem der Ansprüche 4 oder 5, **dadurch gekennzeichnet, daß** dann, wenn der Schritt des Verifizierens des Zugriffs auf den vorgegebenen Sektor (X) den Zugriff auf zwei Sektoren derselben Adresse nicht zuläßt, dieser Schritt in anderen Sektoren der Schutzzone (ZDP; ZDP') erneut ausgeführt wird.

7. Verfahren nach einem der Ansprüche 4 bis 6, bei dem die Originalplatte eine kontinuierliche, spiralförmige Hauptspur (1), die auf dem gesamten Nutzabschnitt der Platte angeordnet ist und deren Sektoren Adressen besitzen, die längs dieser Spur sequentiell geordnet sind, und wenigstens eine sekundäre Spur (2), die zwischen den Windungen der Hauptspur verschachtelt ist, umfaßt, wobei das Verfahren **dadurch gekennzeichnet ist, daß** aufeinanderfolgenden Sektoren der sekundären Spur und den Sektoren, die sich in einer gegebenen radialen Richtung im wesentlichen gegenüber der Hauptspur befinden, dieselben Adressen (A bis A + Q) zugewiesen werden, derart, daß die beiden Teile der Schutzzone gebildet werden.

8. Verfahren nach Anspruch 7, **dadurch gekennzeichnet, daß** es außerdem einen Schritt umfaßt, bei dem das physikalische Vorhandensein der sekundären Spur verifiziert wird.

9. Verfahren nach Anspruch 8, **dadurch gekennzeichnet, daß** die Verifikation des physikalischen Vorhandenseins der sekundären Spur auf der Verifikation der Zeitspannen der verschiedenen Verarbeitungen und/oder Lesevorgänge, die auf der Platte vorgenommen werden, basiert.

10. Verfahren nach Anspruch 9, **dadurch gekennzeichnet, daß** die Verifikation des physikalischen Vorhandenseins der sekundären Spur darin besteht, die Zeit zu messen, die zum Lesen all jener Sektoren notwendig ist, die zwischen einer der ersten Adresse (A) der Schutzzone (ZDP) vorhergehenden Adresse und einer der letzten Adresse (A + Q) dieser Schutzzone folgenden Adresse liegen.

11. Verfahren nach Anspruch 9, **dadurch gekennzeichnet, daß** die Verifikation des physikalischen Vorhandenseins der sekundären Spur darin besteht, die Zeit (t₃) zu messen, die zum Lesen all jener Sektoren notwendig ist, die eine Adresse besitzen, die zwischen der ersten Adresse (A) der Schutzzone (ZDP) und der letzten Adresse (A + Q) dieser Schutzzone liegt, indem von einer der Sprungzonen (ZSA, ZSR) ausgegangen wird, dann die Zeit (t₄) zu messen, die zum Lesen all jener Sektoren notwendig ist, die eine Adresse besitzen, die zwischen der ersten Adresse (A) der Schutzzone (ZDP) und einer der letzten Adresse (A + Q) dieser Schutzzone folgenden Adresse (A + Q + p) liegt, indem von derselben Sprungzone ausgegangen wird, und schließlich die Lesezeiten (t₃, t₄) zu vergleichen.

12. Verfahren nach Anspruch 11, **dadurch gekennzeichnet, daß** außerdem vorgesehen ist, anhand der anderen Sprungzone (ZSR, ZSA) einen Lesevorgang von Sektoren mit Adressen auszuführen, die zwischen einer Adresse (A + Q - k), die der letzten Adresse (A + Q) der Schutzzone vorhergeht, und einer Adresse (A + Q + p), die der letzten Adresse (A + Q) dieser Schutzzone folgt, liegt, und die Identifizierungsinformationen (D1, D2), die während dieses Lesevorgangs erfaßt werden, zu verifizieren.

13. Verfahren nach einem der Ansprüche 7 bis 12, **dadurch gekennzeichnet, daß** außerdem vorgesehen ist, auf der Hauptspur die Informationselemente der aufgezeichneten Anwendung, die in den Sektoren der sekundären Spur verteilt sind, durch Imitate zu ersetzen, die mit den anderen Informationen der Hauptspur vollkommen kohärent und ausführbar sind, und dann, wenn das Verfahren zeigt, daß es sich um eine Plattenkopie handelt, die Informationen und Imitate der Spur der Platte lesen zu lassen, um eine verschlechterte Anwendung ablaufen zu lassen.

## Claims

1. Copy-protected optical disk of the type including at least one spiral track (1) on which information marks are written in sectors whose addresses are substantially sequential along the track, **characterized in that** said disk includes:
- a protection zone (ZDP) comprising two parts of equal size each including a series of sectors designated by identical addresses (A to A+Q) for each part, the data stored in this zone being dispersed between the sectors of the two parts and each sector of the zone also carrying an identifier (D1, D2) characteristic of the part to which the sector belongs; and
- at least specific protection data to enable verification of the presence and constitution of said protection zone (ZDP) and to enable use of the data stored in this zone, at least some elements of said specific data being recorded on said disk.

2. Optical disk according to Claim 1, **characterized in that** it includes a main continuous spiral track (1) covering all the useful part of the disk and whose sectors have addresses ordered sequentially along this track, and at least one secondary track (2) inserted between turns of said main track, sectors of this secondary track and the sectors substantially opposite said main track in a given radial direction having the same addresses (A to A+Q), so as to constitute said two parts of said protection zone (ZDP).

3. Optical disk according to Claim 2, **characterized in that** said interposing of said secondary track in said main track is carried out in such a manner that the pitch of the turns remains the normal pitch over substantially the whole disk.

4. Copy-protection process to determine whether an optical disk is an original disk or an illegal copy and prevent normal use in the case of a copy, said original disk including at least one spiral track (1) on which information marks are written in sectors whose addresses are substantially sequential along the track, said process being **characterized in that** it consists in:
- defining on the original disk a protection zone (ZDP; ZDP') in two parts of equal size each including a series of sectors designated by identical addresses (A to A+Q) for each part, the data stored in this zone being dispersed between the sectors of the two parts and each sector of the zone also carrying an identifier (D1, D2) characteristic of the part to which the sector belongs;
- performing a succession of reads of at least one predetermined sector (X) of said protection zone;
- verifying, by means of said identifiers (D1, D2), that during these reads, access has been made to the two predetermined sectors (X) of said zone having the same address and belonging respectively to the two parts of this zone.

5. Copy-protection process according to Claim 4, **characterized in that** it also consists in defining on the original disk a forward jump zone (ZSA) and a backward jump zone (ZSR) on either side of said protection zone (ZDP; ZDP'), and **in that** the stage involving a succession of reads consists in making a first series of reads starting from the forward jump zone and a second series of reads starting from the backward jump zone.

6. Process according to any one of Claims 4 or 5, **characterized in that**, when said stage of verification of access to said predetermined sector (X) does not enable access to the two sectors of like address, this stage is repeated on other sectors of said protection zone (ZDP; ZDP').

7. Process according to any one of Claims 4 to 6, in which the original disk includes a continuous spiral main track (1) covering all the useful part of the disk and whose sectors have addresses ordered sequentially along this track, and at least one secondary track (2) inserted between the turns of the main track, said process being **characterized in that** the same addresses (A to A+Q) are assigned to successive sectors of said secondary track and to the sectors substantially opposite the main track in a given radial direction, so as to constitute said two parts of said protection zone.

8. Process according to Claim 7, **characterized in that** it also includes a stage to verify the physical presence of said secondary track.

9. Process according to Claim 8, **characterized in that** said verification of the physical presence of said secondary track is based on the verification of the durations of different processings and/or reads carried out on said disk.

10. Process according to Claim 9, **characterized in that** said verification of the physical presence of said secondary track consists in measuring the time necessary for the reading of all the sectors between an address preceding the first address (A) of said protection zone (ZDP) and an address following the last address (A + Q) of this protection zone.

11. Process according to Claim 9, **characterized in that** said verification of the physical presence of said secondary track consists in measuring the time (t₃) necessary for the reading of all the sectors having an address between the first address (A) of said protection zone (ZDP) and the last address (A+Q) of this protection zone, starting from one of said jump zones (ZSA, ZSR), then in measuring the time (t₄) necessary for the reading of all the sectors having an address between the first address (A) of said protection zone (ZDP) and an address (A+Q+p) following the last address (A+Q) of this protection zone, starting from the same jump zone, and finally in comparing said reading times (t₃, t₄).

12. Process according to Claim 11, **characterized in that** it also includes, starting from the other jump zone (ZSR, ZSA), a read of the sectors of addresses between an address (A+Q-k) preceding the last address (A+Q) of said protection zone and an address (A+Q+p) following the last (A+Q) of this protection zone, and in verifying the identifier (D1, D2) detected during this reading.

13. Process according to any one of Claims 7 to 12, **characterized in that** it also includes replacing, on the main track, the data items of the recorded application that are dispersed in the sectors of the secondary track by lures constituting together with the other data of the main track a coherent and executable whole and, when said process shows that the disk is a copy, allowing reading of the data and lures of the track of the disk so as to allow a degraded application to run.
